# EUROPEAN PATENT APPLICATION

(11) **EP 2 266 899 A2**
(43) Date of publication of application: **29.12.2010**
(21) Application number: 10167319.2
(22) Date of filing: 25.06.2010
(51) Int. Cl.: B65G 25/08, B65G 65/44

(54) **Method and system for stoker ladder replacement via an open top stoker front beam**

(30) Priority: 25.06.2009 US 220280 P; 18.06.2010 US 818745
(71) Applicant: Andritz Technology and Asset Management GmbH, 8045 Graz (AT)
(72) Inventor: Burns, Richard, Roswell, GA 30076 (US); Thornquist, Lennart, Doravilla, GA 303040 (US)
(74) Representative: HOFFMANN EITLE

(57) **Abstract**

A stoker device (40) including: a ladder conveyor (46) having legs extending over a bed (42) and a channel, a yoke connecting a rear portion the legs; a beam assembly fixed to the bed (42) and coupling the yoke to a reciprocating drive, wherein the beam assembly comprises an anchor attached to the bed on one side of the channel, a brace beam attached to the anchor and extending over the channel, and a front beam (72) on an opposite side of the channel to the anchor.

## Description

### RELATED APPLICATION

This application claims priority to and the benefit of the filing date of U.S. Provisional Patent Application Serial Number 61/220,280 filed on June 25, 2009, the entirety of which is incorporated by reference.

### BACKGROUND OF THE INVENTION

The invention relates generally to a feeding device for moving material to a conveyor in a channel, and particularly relates to a stoker device having a front beam supporting a reciprocating conveyor at the bottom of a pile of comminuted material.

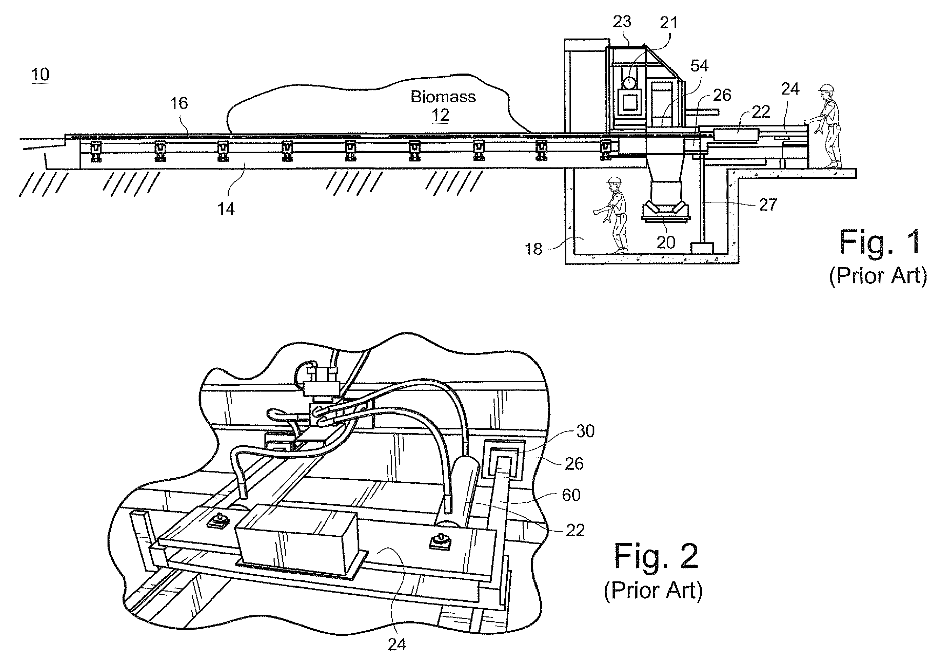

As shown in Figures 1 and 2, a conventional stoker device 10 moves material from a pile of the material to a channel 18 having a conveyor 20. The conveyor 20 may move the material 12 to a process. The material is loaded onto a bed 14. The stoker device includes ladder conveyors 16 arranged side-by-side on the bed and extending the length of the bed. The ladder conveyors are below the pile of the material 12. The ladder conveyors each move cyclically back and forth short distances to move the material towards an end of the bed adjacent or over the channel 18.

The stoker device includes a rotating spike roller 21 over openings 54 at the end of the bed. After the material passes beneath a shear wall the spike roller acts as a lump breaker prior to the material dropping through the openings 54 and into the channel 18 where the material falls onto a conveyor 20. A hood 23 covers the spike roller, channel and an end portion of the ladder conveyors extending over the channel.

The ladders of the stoker device are pushed and pulled by hydraulic cylinders 22. The hydraulic cylinders each have a reciprocating rod that pushes and pulls a yoke 24 attached to the end of each leg of a ladder. The opposite ends of the hydraulic cylinders are attached to a front beam 26, which is typically positioned just beyond openings in the floor of the bed for the material to enter the conveyor 20.

The front beam 26 is conventionally a steel beam arranged perpendicular to the legs of the ladder conveyor. There may be a front beam for each ladder conveyor. A row of front beams is arranged perpendicular to the legs of the ladder conveyors. Each front beam 26 is supported by support posts 27 extending up from the channel or fixed to a ledge of the bed that extends over the channel. Each front beam 26 provides a fixed lateral support for one of the ladder conveyors. Openings in the front beam 26 conventionally allow the legs 60 of each ladder to extend through the front beam.

The hydraulic cylinders 22 and the yoke 24 end of a ladder conveyor are arranged on one side of the front beam. The legs of the ladder conveyor extend through openings in the front beam, over the channel and across the floor of the bed. The openings in the front beam include rectangular flanges 30 that form a sleeve for the legs of the ladders. The flanges 30 assist in maintaining in proper alignment and a seal for the legs as the ladders move back and forth on the bed 14.

The openings (see flange 30) in the front beam for the legs of the ladder conveyors are conventionally just large enough to accommodate the legs and the flange 30 for the legs. The openings are framed by the flanges 30 that are attached to the sides of the beam. The openings are in the middle of the beam to minimize reducing of the strength of the front beam.

The conventional front beam is a large steel beam having a rectangular cross-section. The front beam 26 is a principal structural support for a ladder conveyor. The front beam anchors the ladder conveyor to the bed. As the hydraulic cylinders move the ladder conveyors back and forth, the cylinders apply equal and opposite forces to the front beam. The conventional front beam has sufficient mass and structural strength to support the reciprocating ladder conveyor during years of operation.

The openings and flanges 30 in a conventional front beam do not allow for easy removal of the ladders. A difficulty arises when a ladder conveyor needs to be replaced. To remove a ladder conveyor from the front beam it is conventional to remove the flanges 30 and cut the legs of the conveyor to be removed. The ladder conveyor is repaired or replaced, and placed back in the front beam. After the legs of the ladder conveyor are placed in the front beam, the legs are welded together and to the yolk. The flanges 30 are attached to the beam to complete the repair or replacement of the ladder conveyor.

Cutting and welding the front beam or legs of the ladder to replace the ladders and yolks is time consuming and interrupts the operation of the stoker device and possibly the downstream process. Further, cutting and welding the front beam or ladders in an uncontrolled atmospheric environment, e.g., field welds, risks adding structural weaknesses to the ladders and front beam. Accordingly, there is a long felt need for a stoker device in which ladder conveyor can be replaced without the time, expense and risk of cutting the ladder or front beam, or making field welds.

### SUMMARY OF THE INVENTION

A front beam assembly has been developed for a stoker device that conveys material to a channel. The front beam assembly, in one embodiment, includes an anchor plate attached to one side of a channel in the bed, at least one brace beam extending from the anchor plate at least partially across the channel to a front beam. The brace beam may have an end cast in the concrete bed, as is the anchor plate. The brace beam provides structural support and an anchor for the front beam. The front beam may be an assembly of metal, e.g., steel, braces and plates that provide structural support for the ladder conveyors and the hydraulic cylinders.

Each front beam includes slots to receive the legs of the ladder conveyor. The slots in the front beam elevate the legs of the ladder conveyor above the wear surface of the deck to reduce the wear on the legs as they slide through the slots in the beam. The front beam has braces, brackets and plates to provide structural strength to support the ladder conveyors and their hydraulic cylinder.

A ladder conveyor may be installed by being pivoted downward and into the slots of the front beam. After the legs are installed, the slots are covered by removable plates, e.g., cut-outs. Once the ladder conveyor is seated in the slots of the front beam, packing is applied to the slot around the legs, the cut-out plates are placed on the front beam to cover slots, the hydraulic cylinders are connected to brackets on the front beam, and an access panel is replaced on a hood that covers the front beam. When the cut-out plates are removed, the legs of the ladder conveyor can be pivoted upward and out of the front beam.

The front beam for each ladder conveyor allows for removal and installation of an individual ladder conveyor by disconnecting the hydraulic cylinders, removal of an access plate on the hood, removal of cut-out plates on the front beam and packing in the slots of the beam around the legs of the conveyor. It is not necessary to cut and weld the ladder conveyor or the front beam.

A stoker device has been conceived for moving biomass, wood chips, other comminuted cellulosic material, tire chips (Tire-Derived-Fuel) or other material (collectively referred to as " material") from a bed, through an opening in the bed to a channel at a lower elevation than the bed, the device includes: a plurality of ladder conveyors arranged on the bed and extending over the channel, wherein each ladder conveyor includes a pair of parallel legs extending along the bed and over the channel, and a yoke connecting the legs at a rear portion the legs; a front beam assembly supporting the legs of each of the plurality of ladder conveyors, wherein the front beam assembly spans the opening in the bed and includes an anchoring plate attached to the bed on one side of the opening, at least one brace beam attached to the anchoring plate and extending over the opening, and a front beam on an opposite side of the opening from the anchoring plate, wherein the front beam is generally perpendicular to a corresponding ladder conveyor and includes slots extending down from an upper edge of the front beam to receive the legs, and further the front beam includes at least one bracket attachable to a first end of a hydraulic cylinder having a second end attached to the yoke.

The front beam assemblies may be arranged in a row and the stoker device further comprises a hood covering the row of front beam assemblies. The hood may include a plurality of removable panels each aligned with one of the front beams. At least one removable cover plate over one of the slots in the front beams, wherein the cover plate is removed to allow removal of the ladder conveyor. The front beam may include a front wall plate parallel to a rear wall plate, wherein the front and rear wall plates are transverse to the legs of the ladder conveyor. A vertical brace plate may be adjacent at least one the slots and the vertical brace plate extends between the front and rear wall plates. At least one horizontal brace plate may be below one of the slots and the horizontal brace plate extends between the front and rear wall plates. The brace beam may extend into and is anchored in the bed. Further, the brace beam and anchoring plate may be cast in concrete of the bed.

A stoker device has been conceived for moving material from a bed, through an opening to a channel at a lower elevation than the bed, the device comprising: at least one ladder conveyor arranged on the bed and extending over the channel, wherein the at least one ladder conveyor includes a plurality of legs extending over the bed and the channel, and a yoke connecting a rear portion of the legs; a beam assembly guiding the legs of the at least one ladder conveyor, wherein the beam assembly includes an anchor plate attached to the bed, at least one brace beam extending over the opening from the anchor plate and a front beam fixed to the at least one brace beam, wherein the front beam is on an opposite side of the opening from the anchor plate, the front beam is transverse to the legs of the at least one ladder conveyor and includes slots extending down from an upper surface of the front beam, wherein each slot is adapted to receive one of the legs, and further the front beam includes at least one bracket attachable to a first end of a reciprocating drive device having a second end attached to the yoke.

### BRIEF DESCRIPTION OF THE DRAWINGS

FIGURE 1 is a side view of a conventional stoker device.

FIGURE 2 is a close-up view of a portion of the conventional stoker device including the front beam, a wall to which the front beam is attached or cast in place, conveyor ladders and bed for the ladders.

FIGURE 3 is a front perspective view of a novel stoker device showing the bed, ladder conveyors, a front beam assembly and an open front side of a hood covering the front beam assembly.

FIGURE 4 is a close-up view of the ladder conveyors, a spike roll and the novel front beam shown in Figure 3.

FIGURE 5 is a rear perspective view of the stoker device shown in Figure 3 having the front beam assembly and showing the channel, the hood for the front beam, and the yoke portions of the ladder conveyors

FIGURE 6 is a close-up view of the front beam portion of the front beam assembly shown in Figure 3, the hood, the yoke portion of each of the ladder conveyors and the hydraulic cylinders coupled to the yoke portion.

FIGURE 7 is a rear and top perspective view of the front beam assembly shown in Figure 3.

FIGURE 8 is a front and bottom perspective view of the front beam assembly shown in Figure 3.

FIGURES 9 and 10 are top and rear views, respectively, of the front beam assembly shown in Figure 3.

FIGURE 11 is a cross-sectional diagram of the front beam of the front beam assembly and taken along line 11-11 in Figure 9.

### DETAILED DESCRIPTION OF THE EMBODIMENT DISCLOSED IN THE

### DRAWINGS

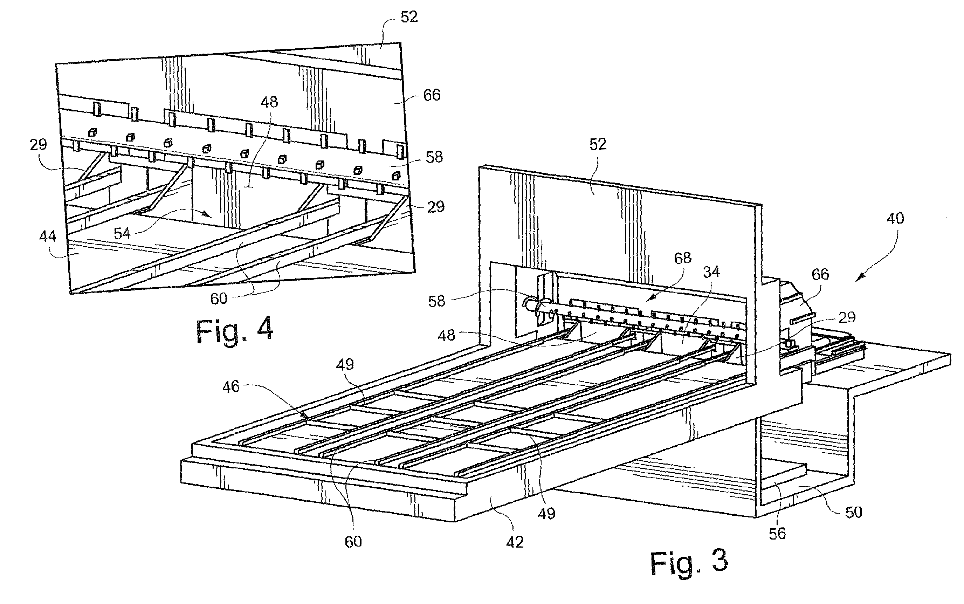

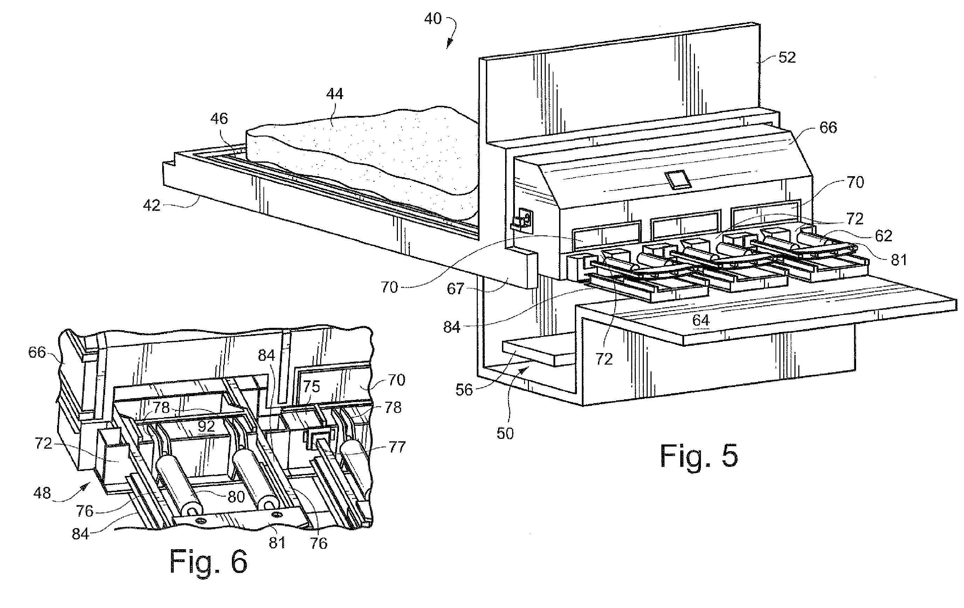

FIGURES 3 and 5 are rear and front perspective views, respectively, of a stoker device 40 having a flat bed 42 to receive material 44. Figure 4 is an enlarged view of the rear of the stoker device.

Reciprocating ladder conveyors 46 are arranged in rows on the bed. A front beam assembly 48 anchors each of the ladder conveyors. A lower channel 50 receives the material from the ladder conveyor. The ladder conveyors each shuffle back and forth to move the material 44 on the bed towards a front shear wall 52 that supports the front beam assemblies 48. The legs 60 of the each ladder conveyor extend over the surface of the bed 42. Bars 49 (only a few of the bars are shown) between the legs are arranged to move the material towards the front of the bed and the ladders move back and forth. An opening 54 in the stoker floor allows material moved to the front of the bed to fall through the opening into the channel 50 and onto a conveyor 56 in the channel.

The opening 54 in the stoker floor 42 is aligned with the front beam assembly 48, and is below the spike roll 58 and the hood 66. As the spike roll 58 turns, compacted material 44 is lifted and dropped through the opening 54 and to the conveyor 56 in the channel 50. Each stoker ladder has a pair of legs 60 that extend through an opening in the front beam assembly 48.

As shown in Figures 5 and 6, a ladder guide 84 for the stoker ladder conveyor extends from the rear side of the front beam, partially over the channel 50 to a support surface 64. A generally rectangular hood 66 for the front beam is attached to a backside of the front wall 52 and is supported by a ledge 67 of the stoker floor that extends partially over the channel 50. The hood 66 has an open front face 68 (Fig. 3) aligned with an opening in the front wall 52 that is aligned with the bed 42. The bottom of the hood 66 extends partially over the channel and the row of front beams. The sidewalls of the hood supports the axial ends of the spike roll 58.

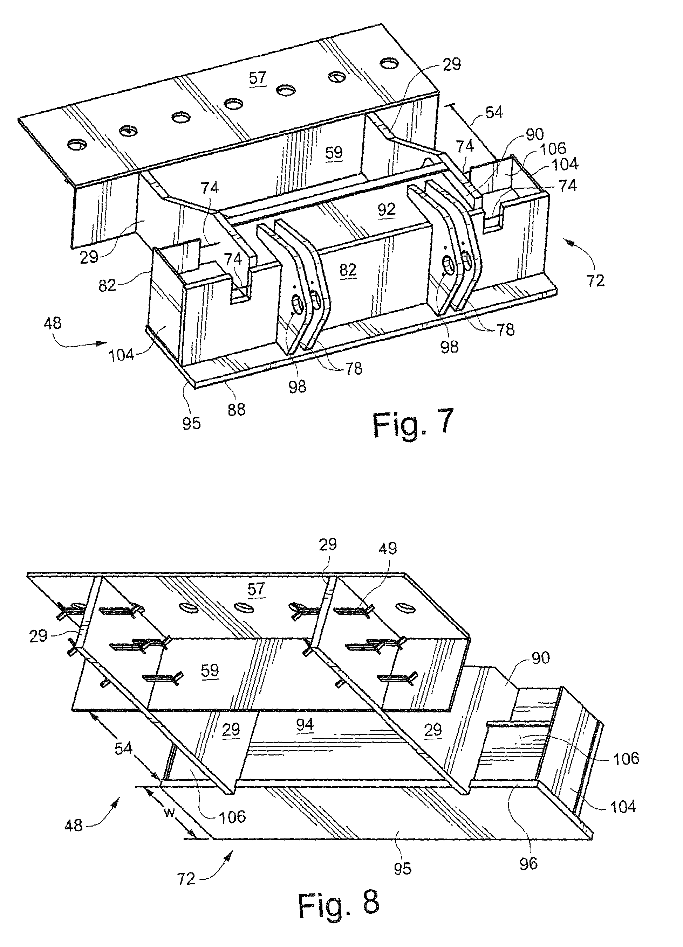

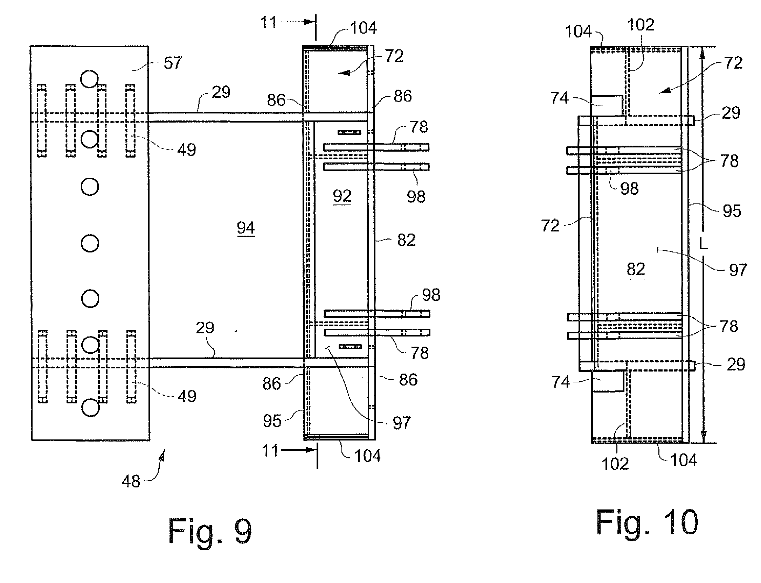

As shown in Figures 6 to 10, the front beam assembly 48 includes, for example, a front beam 72, a top plate 57 and brace beams 29 between the front beam and top plate that extend over the opening 54 in the bed. The front beam 48 assembly may be formed of structural steel having a thickness sufficient to support the ladder conveyors.

The top plate 57 of each of front beam assemblies 48 is anchored or cast into a horizontal surface of the stoker bed floor 42, such as a concrete or other infrastructure extending partially over the channel. The top plate 57 forms an anchoring plate that may be cast in the upper surface of the bed floor, such as by having holes in the top plate to receive concrete poured for the bed. The top plate 57 may include a side plate 59 that abuts the side of the opening 54 in the stoker floor.

The brace beams 29 may be steel beams, cast in the stoker floor during the concrete casting of the floor and have a narrow thickness (horizontal direction) and an extended width (vertical direction). Each brace beam 29 extends partially through the front beam 72 and forms an inner sidewall of a slot 74 adjacent the beam. The portion of the brace beam 29 in the front beam may be higher than the portion of the brace beam anchored in the bed. The middle portion of the brace beam 29 may be angled downward from the front beam 72 to the top plate 57. The portion of the front beam cast in the bed may include anchoring fingers 49 that extend perpendicularly from the brace beam and into the concrete of the floor.

The front beams 72 may be arranged in a linear row parallel to the channel. Each front beam 72 corresponds to one of the ladder conveyors and includes a pair of slots 74 having an upper opening to receive the legs 76 of a ladder conveyor.

The front beams 48 are covered by the hood 66. An access panel 70 on the rear wall of the hood and above each of the front beams may be removed to provide access to the front beam and the interior of the hood. Figure 6 shows one of the panels 70 on the right side of the figure and shows on the left side a view of the front beam after a panel has been removed. A small removable horizontal plate 75 is placed on front beam over each slot 74 to facilitate removal of the legs of the ladder conveyor. Similarly, a removable bracket or packing material 77 slides vertically in each slot 74 and forms a seal around the leg of the ladder conveyor.

Two pairs of brackets 78, such as sets of vertical ribs, extend from the top plate 92 and rear plate 82 of the front beam. The brackets 78 include apertures 98 that provide a coupling for the hydraulic cylinders 22 or other reciprocating drive device, that move the conveyor. One end of the hydraulic cylinders attached to the brackets 78 and the opposite end attaches to an end yoke 81 of the ladder conveyor.

A ladder rail guide 84 is below each of the ladder legs 76 to provide a sliding surface for the yoke and rear portion of the legs. The ladder rail guide 84 extends from the support surface 64 to the flat lower front beam 70 of the hood.

The bottom plate 95 is secured to a concrete floor 67 or steel support, and is positioned adjacent to or over the channel. The bottom plate 95 is mounted horizontally and flat against the floor 67.

A steel rear wall plate 82 to the front beam 72 extends vertically up from the bottom plate 95 and extends the length (L) of the front beam. Similarly, a steel front wall 94 extends vertically up from the bottom plate 95 and along a front 96 along the length of the front beam. The rear and front walls 82, 94 are generally rectangular and include two rectangular slots 74 extending down from the upper edge of the wall to an elevation corresponding to the bottom of the legs of the ladder conveyor, e.g., about one-third the height (H) of the rear and front walls 82, 94. The slots 74 are sufficiently wide to receive a leg of the ladder. The rear wall 82 is positioned back from the rear edge 88 of the bottom plate 95 approximately one-quarter of the width (W) of the bottom plate 82. The front wall 94 abuts or is attached to the brace beam 29.

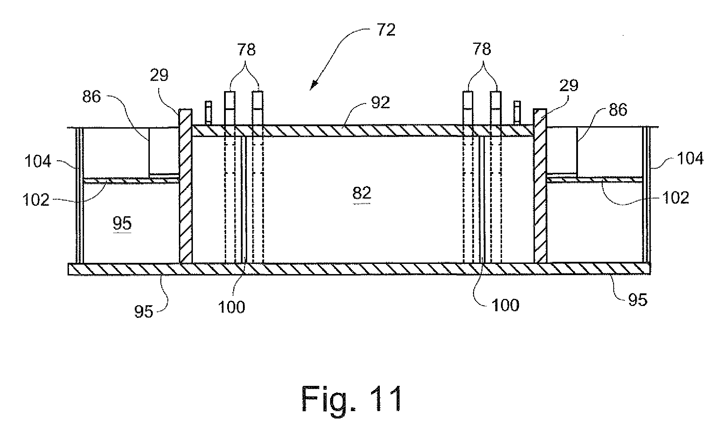

As shown in Figure 11, the brace beam 29 extends between the rear and front walls and is attached to the walls, e.g., by welding. The brace beam 29 may be attached to the ends of the font wall 94 and to an inside surface of the rear wall 82. The brace beams 29 are immediately adjacent the slots 74 and form a sidewall to the slots. The brace beams 29 are perpendicular to the front and rear walls, and the bottom plate. A top steel plate 92, which may be welded steel plates, is attached to the upper edges of the brace beam 29, rear wall 82 and the front wall 94.

The bottom plate 95, rear wall 82, top plate 92 and front wall 94 form a rectangular box 97 that is structurally strong and provides supports for the slots 86 and the brackets 78 that have openings 98 to receive a pin coupling to a rod of a hydraulic cylinder. An upright rectangular steel rib 100 in the interior of the box 97 extends between the bottom plate 82, top plate 92, rear wall 82 and the front wall 94. Each rib is preferably parallel to and aligned between the brackets 78. The rib provides structural support for the rectangular box and, specifically, for the brackets and their associated connection to the hydraulic cylinders.

A pair of second front walls 106 extends between the brace beam 29 and an end plate 104. These second front walls 106 include the slot 74 for the legs of the ladder conveyor. A horizontal leg support plate 102 extends between the front and back plates 106, 82, the brace beam 29 and the end wall plate 104. The horizontal leg support plate 102 is immediately below the lower edge of each slot 74. The leg support plates 102 braces the region of the front and rear walls 82, 106 near the slots 74.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A stoker device for moving material from a bed to a channel at a lower elevation than the bed, the device comprising:
at least one ladder conveyor arranged on the bed and extending over the channel, wherein the at least one ladder conveyor includes a plurality of legs extending over the bed and the channel, and a yoke connecting a rear portion of the legs;
a beam assembly guiding the legs of the at least one ladder conveyor,
wherein the beam assembly includes an anchor plate attached to the bed, at least one brace beam extending at least partially over the channel from the anchor plate and a front beam fixed to the at least one brace beam;
the front beam is transverse to the legs of the at least one ladder conveyor, wherein slots extending down from an upper surface of the front beam each receive one of the legs and the front beam is attached to a reciprocating drive device having a second end attached to the yoke.

2. The stoker device as in claim 1 wherein the reciprocating drive device is at least one hydraulic cylinder.

3. The stoker device as in claim 1 or 2, further comprising a plurality of the front beam assemblies arranged in a row and the stoker device further comprises a hood covering the front beam assemblies.

4. The stoker device as in claim 3 wherein said hood includes a plurality of removable panels each aligned with one of the front beams.

5. The stoker device as in any one of the preceding claims, further comprising at least one removable cover plate over one of the slots in the front beam, wherein the cover plate is removed to allow removal of a leg of the ladder conveyor.

6. A stoker device for moving material from a bed, through an opening in the bed to a channel at a lower elevation than the bed, the device comprising:
a plurality of ladder conveyors arranged on the bed and extending over the channel, wherein each ladder conveyor includes a pair of parallel legs extending along the bed and over the channel, and a yoke connecting the legs at a rear portion the legs;
a front beam assembly supporting the legs of each of the plurality of ladder conveyors, wherein the front beam assembly spans the opening in the bed and includes an anchoring plate attached to the bed on one side of the opening, at least one brace beam attached to the anchoring plate and extending over the opening, and a front beam on an opposite side of the opening from the anchoring plate,
wherein the front beam is generally perpendicular to a corresponding ladder conveyor and includes slots extending down from an upper edge of the front beam to receive the legs, and further the front beam includes at least one bracket attachable to a first end of a hydraulic cylinder having a second end attached to the yoke.

7. The stoker device as in claim 6 wherein the front beam assemblies are arranged in a row and the stoker device further comprises a hood covering the row of front beam assemblies.

8. The stoker device as in claim 7 wherein said hood includes a plurality of removable panels each aligned with one of the front beams.

9. The stoker device as in claim 6, 7 or 8, further comprising at least one removable cover plate over one of the slots in the front beams, wherein the cover plate is removed to allow removal of the ladder conveyor.

10. The stoker device as in any one of the preceding claims, wherein the front beam includes a front wall plate parallel to a rear wall plate, wherein the front and rear wall plates are transverse to the legs of the ladder conveyor.

11. The stoker device as in claim 10 wherein the front beam includes a vertical brace plate adjacent at least one the slots and the vertical brace plate extends between the front and rear wall plates.

12. The stoker device as in claim 10 or 11 wherein at least one horizontal brace plate is below one of the slots and the horizontal brace plate extends between the front and rear wall plates.

13. The stoker device as in any one of the preceding claims, wherein the brace beam extends into and is anchored in the bed.

14. The stoker device as in any one of the preceding claims, wherein the brace beam and anchoring plate are cast in concrete of the bed.

15. The stoker device as in any one of the preceding claims, wherein each slot has a sidewall formed by one of the brace beams.
